(19) Europäisches Patentamt
European Patent Office
Office européen des brevets

(11) Veröffentlichungsnummer: **0 058 311**
**B1**

# (12) EUROPÄISCHE PATENTSCHRIFT

(45) Veröffentlichungstag der Patentschrift: **03.10.84**

(51) Int. Cl.³: **C 08 F 8/22**, C 08 F 6/24

(21) Anmeldenummer: **82100434.8**

(22) Anmeldetag: **22.01.82**

(54) **Verfahren zur Herstellung eines feinkörnigen nichtagglomerierenden Chlorpolyethylens.**

(30) Priorität: **14.02.81 DE 3105404**

(43) Veröffentlichungstag der Anmeldung: **25.08.82 Patentblatt 82/34**

(45) Bekanntmachung des Hinweises auf die Patenterteilung: **03.10.84 Patentblatt 84/40**

(84) Benannte Vertragsstaaten: **BE DE FR GB IT NL**

(56) Entgegenhaltungen:
**DE - A - 2 036 395**
**FR - A - 1 487 861**
**US - A - 3 994 995**

(73) Patentinhaber: **HOECHST AKTIENGESELLSCHAFT, Postfach 80 03 20, D-6230 Frankfurt am Main 80 (DE)**

(72) Erfinder: **Ohorodnik, Alexander, Dr., Kastanienweg 24, D-5042 Erftstadt (DE)**
Erfinder: **Keuper, Hans Walter, Dr., Dachsweg 4, D-5000 Köln 40 (DE)**
Erfinder: **Semmler, Horst, Dr., Merrischer Strasse 32, D-5040 Brühl (DE)**
Erfinder: **Hardel, Joachim, Stiftstrasse 4, D-5040 Brühl (DE)**
Erfinder: **Vierling, Hermann, Kapellenstrasse 8, D-5030 Hürth (DE)**
Erfinder: **Willms, Robert, Am grünen Weg 3, D-5030 Knapsack (DE)**

**EP 0 058 311 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Chlorpolyethylen – im folgenden CPE genannt – wird, wie in den deutschen Patentschriften Nrn. 1236774, 1266969, 1469990 sowie 2343983 und DE-OS Nr. 2456278 ausführlich dargelegt, in grosstechnischem Massstab zur Herstellung thermoplastischer Massen verwendet. Die Herstellung des Chlorpolyethylens erfolgt bekannterweise durch Chlorierung von Niederdruckpolyethylen (PE) in wässeriger Phase. Durch die Chlorierung werden die physikalischen Eigenschaften des eingesetzten Polyethylens erheblich verändert. Während das Polyethylen als feinkörniges Pulver keine markanten elastischen Eigenschaften besitzt, und auch keine Neigung zur Teilchenagglomeration zeigt, weist das CPE einerseits eine an sich erwünschte gummiartige Elastizität auf, tendiert andererseits jedoch infolge dieser veränderten Beschaffenheit des Produktes zu einer unerwünschten Teilchenagglomeration. Diese Problematik wird beispielsweise in der DE-AS Nr. 1420407 im Zusammenhang mit der Chlorierung von Niederdruckpolyethylen linearen Molekülbaus, kristallinartiger Struktur und einer Korngrösse zwischen 0,1 und 300 µm ausführlich abgehandelt.

Zur Verhinderung der Teilchenzusammenballung bei der Chlorierung von Polyethylen in wässeriger Phase wird nach der DE-AS Nr. 1420407 die Zugabe von inerten Zuschlagstoffen vorgeschlagen. Als Zuschläge werden Kieselsäure bzw. Kieselgur, Bariumsulfat, Asbestmehl, Titandioxid, Graphit, Siliziumcarbid, Glaspulver und halogenierte Kunststoffe wie z.B. Polyvinylchlorid genannt. Durch vorgenannte Massnahme kann zwar die Teilchenagglomeration des CPE auf eine bestimmte Grösse limitiert werden, nicht aber die ursprüngliche Kornverteilung des PE beibehalten werden. Auf die hieraus resultierenden Nachteile wird in den deutschen Patentschriften Nrn. 2260525 und 2343983 hingewiesen. Zur Problemlösung wird hierbei vorgeschlagen, die Chlorierung von Niederdruckpolyethylen mit Chlor in wässeriger Phase in Gegenwart von 0,1 bis 2 Gew.-% Kieselsäure und 0,01 bis 1 Gew.-% Silikonöl, bezogen auf das eingesetzte Niederdruckpolyethylen, durchzuführen. Werden zur Chlorierung von Niederdruckpolyethylen gemäss Patentschrift Nr. 2260525 Kieselsäure der geforderten Qualität und Silikonöl – vorzugsweise ein Polysiloxan aus der Reihe der Dimethylpolysiloxane – eingesetzt, bleibt das Kornspektrum des eingesetzten Niederdruckpolyethylens auch im chlorierten Produkt erhalten.

Die vorgeschlagenen Massnahmen reichen jedoch nicht aus, um auch bei den nachfolgenden Aufbereitungsoperationen des Chlorierungsgemisches, d.h. bei der Abtrennung des Feststoffes aus der Suspension, dem Auswaschen des dem CPE anhaftenden Chlorwasserstoffs, der Trocknung und vor allem bei der Produktlagerung eine Teilchenagglomeration wirksam zu verhindern. Alle Massnahmen zur Verhinderung der Teilchenagglomeration unterliegen jedoch der Einschränkung, dass sie weder die Produktqualität beeinträchtigen noch die Aufarbeitungsvorgänge erschweren dürfen.

Einige Aspekte dieser Problematik werden in der deutschen Patentschrift Nr. 2343983 angedeutet. Dabei wird darauf hingewiesen, dass Zuschlagstoffe zur Unterbindung der Agglomeration gemäss DE-AS Nr. 1420407 wie z.B. Kieselsäure oder Kieselgur einerseits diese Aufgabe zufriedenstellend lösen, andererseits aber die Produktqualität so nachteilig beeinflussen, dass bei der Abmischung des CPE mit PVC hieraus eine Verschlechterung der rheologischen und mechanischen Eigenschaften des Gemisches resultiert. Darüber hinaus ist noch zu berücksichtigen, dass die Teilchenagglomeration auch vom Molekulargewicht des eingesetzten Niederdruckpolyethylens abhängt.

Es wurde nunmehr gefunden, dass man die Nachteile, die sich bei der Aufbereitung eines beispielsweise gemäss deutscher Patentschrift Nr. 2343983 hergestellten CPE durch Chlorierung von Niederdruckpolyethylen jeder Molekülgrösse in wässeriger Phase in Gegenwart von Kieselsäure und Silikonöl ergeben, restlos vermeiden kann, wenn man nach der Chlorierung und Abkühlung der Suspension das CPE in der wässerigen Phase mit Talkum belegt. Grundsätzlich ist festzustellen, dass die bisher vorgeschlagenen Zusätze eine Teilchenagglomeration nur in der wässerigen Suspension verhindern, da sie auf die CPE-Teilchen nicht aufziehen. Sofern die Zusätze auf die CPE-Teilchen aufziehen, wie z.B. Kieselsäure oder Kieselgur, verschlechtern sie das rheologische Verhalten des beim Abmischen des CPE mit PVC erhaltenen Gemisches.

Die Erfindung betrifft somit ein Verfahren zur Herstellung von feinkörnigem nicht agglomerierenden Chlorpolyethylen, durch Chlorierung von pulverförmigem Polyethylen in wässeriger oder wässerig-salzsaurer Suspension mit Chlorgas bei einer Temperatur von etwa 20 bis 140° C in Gegenwart von Kieselsäure und Silikonöl und Abtrennen, Waschen und Trocknen des Chlorpolyethylens, welches dadurch gekennzeichnet ist, dass man nach beendeter Chlorierung die wässerigsalzsaure Suspension des Chlorpolyethylens, gegebenenfalls nach vorheriger Abkühlung, mit einer wässerigen oder wässerig-salzsauren Dispersion, in welcher Talkum sowie ein Mono- und/oder Diester der Orthophosphorsäure oder ein Polysiloxan mit Hilfe eines Emulgators dispergiert sind, intensiv mischt und anschliessend aus dem Gemisch das Chlorpolyethylen abtrennt, wäscht und trocknet.

Das zur Chlorierung eingesetzte Polyethylen ist vorzugsweise ein Niederdruckpolyethylen mit einem Molekulargewicht zwischen 10000 bis 2500000 und einer Korngrösse von 0,1 bis 500 µm, welches in Gegenwart von 0,1 bis 2 Gew.-% Kieselsäure und 0,01 bis 1 Gew.-% Silikonöl, jeweils auf die Polyethylenmenge bezogen, chloriert wird. Die Chlorierung des Polyethylens kann beispielsweise in 5 bis 25%iger Salzsäure erfolgen.

Nach einer weiteren bevorzugten Ausführungsform des Verfahrens der Erfindung beträgt die Talkummenge etwa 2 bis 6 Gew.-%, die Menge des Orthophosphorsäureesters bzw. des Polysiloxans etwa 0,05 bis 1 Gew.-%, jeweils bezogen auf die Chlorpolyethylenmenge, und die Menge des Emulgators etwa 0,5 bis 2,5 Vol.-%, bezogen auf das Volumen der Chlorpolyethylensuspension.

Die Esterreste des Mono- und/oder Diesters der Orthophosphorsäure sind vorzugsweise Alkylreste mit 10 bis 20 C-Atomen oder Polyoxyalkylenreste mit 4 bis 20 C-Atomen. Als Polysiloxane sind beispielsweise solche aus der Reihe der Dimethylpolysiloxane geeignet.

Orthophosphorsäureester, die den Anforderungen des Verfahrens der Erfindung entsprechen, sind beispielsweise Verbindungen folgender Konstitution:

a) $CH_3-(CH_2)_7-CH-CH-CH_2-O-(CH_2-CH_2-O)_5-P(OH)_2O$

b) $[CH_3-(CH_2)_7-CH-CH-CH_2-O-(CH_2-CH_2-O)_5]_2-P(OH)O$

c) $[iso\text{-}C_{13}H_{27}O]_2-P(OH)O$

d) $C_6H_2(C_4H_9)_3-O-(CH_2-CH_2-O)_4-P(OH)_2O$

e) $[C_6H_2(C_4H_9)_3-O-(CH_2-CH_2-O)_4]_2-P(OH)O$

f) $C_6H_5-O-(CH_2-CH_2-O)_6-P(OH)_2O$

g) $[C_6H_5-O-(CH_2-CH_2-O)_6]_2-P(OH)O$

h) $C_4H_9-CH(C_2H_5)-CH_2-O-P(OH)_2O$

i) $[C_4H_9-CH(C_2H_5)-CH_2-O]_2-P(OH)O$

Unter den dem technischen Sprachgebrauch zufolge als Silikonöl bzw. Polysiloxan bezeichneten Organosiliziumverbindungen werden Verbindungen verstanden, die auf der wiederkehrenden Einheit der allgemeinen Formel

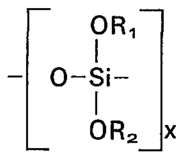

aufgebaut sind, worin $R_1$ und $R_2$ Alkyl-, Aryl- bzw. Aralkylreste und x eine ganze Zahl von 10 bis 10000, vorzugsweise 100 bis 1000, bedeutet.

Schliesslich verwendet man nach einer bevorzugten Ausführungsform der Erfindung als Emulgator einen nichtionischen Emulgator.

Bei der erfindungsgemässen Arbeitsweise, für welche die Belegung der Oberflächen der CPE-Teilchen mit Talkum charakteristisch ist, werden die mechanischen und rheologischen Eigenschaften des Polymeren nicht verschlechtert, vielmehr sogar verbessert. Die Problematik dieser Arbeitsweise liegt vorwiegend in der Schwierigkeit, Talkum in wässeriger Suspension auf den Oberflächen der CPE-Teilchen zu fixieren. Dieses Problem wird durch den Zusatz von geeigneten Fixierungsmitteln zu der Talkum-Dispersion gelöst.

Die nachstehenden Beispiele dienen der näheren Erläuterung der erfindungsgemässen Arbeitsweise.

*Beispiel 1*

a) 155 g Talkum wurden in 650 ml Wasser suspendiert, die Suspension mit einer wässerigen Phosphorsäureesterdispersion versetzt und das Gemisch unter Rühren homogen dispergiert. Die Phosphorsäureesterdispersion bestand aus 252 ml Wasser, 28 g eines Gemisches des Mono- und Diesters der Orthophosphorsäure mit 5fach ethoxyliertem Oleylalkohol sowie 3 g eines Emulgators in Form eines Polykondensationsproduktes aus Isotridekanol und Ethylenoxid. Den Estern kommen folgende Konstitutionsformeln zu:

$CH_3-(CH_2)_7-CH-CH-CH_2-O-(CH_2-CH_2-O)_5-P(OH)_2O$ bzw. $[CH_3-(CH_2)_7-CH-CH-CH_2-O-(CH_2-CH_2-O)_5]_2-P(OH)O$.

b) 2 kg pulverförmiges Niederdruckpolyethylen wurden in einem Chlorierungskessel in 20 kg 20%iger Salzsäure suspendiert, die Suspension mit 1,6 g handelsüblichem Silikonöl der Bezeichnung AK 100® (Firma Wacker-Chemie GmbH, München) sowie 14 g Aerosil® (Firma Degussa, Frankfurt/Main) versetzt und im Temperaturbereich zwischen 20 und 140°C mit Chlorgas bis zu einem Chlorgehalt im CPE von 34,5 Gew.-% chloriert. Die Suspension wurde anschliessend unter Rühren auf etwa 40°C abgekühlt, mit der gemäss a hergestellten Dispersion versetzt und unter weiterem Abkühlen auf Raumtemperatur 30 min gerührt.

Das erhaltene CPE wurde abfiltriert, mit Wasser gewaschen und getrocknet.

Die Korngrössenverteilung des erhaltenen CPE ist in der Tabelle dargestellt.

*Beispiel 2*

a) 194,4 g Talkum wurden in 370 ml Wasser eingetragen und durch Zugabe von 135 g des emulgierten Polysiloxans E 115® (Firma Wacker-Chemie GmbH, München) unter kräftigem Rühren homogen dispergiert. E 115® besteht aus einer Dispersion von etwa 17 Gew.-% Polysiloxan und 3 Gew.-% eines Emulgators in Wasser.

b) 2,5 kg Niederdruckpolyethylen wurden in 25 kg 20%iger Salzsäure suspendiert, mit 2 g Silikonöl AK 100® (Firma Wacker-Chemie GmbH, München) sowie 23 g Aerosil® (Firma Degussa, Frankfurt/Main) versetzt und analog Beispiel 1 chloriert. Nach Abkühlen des Chlorierungsgemisches auf etwa 45°C wurde in das Gemisch die gemäss a hergestellte Dispersion eingetragen und das Gemisch unter weiteren Abkühlen auf Raumtemperatur 30 min gerührt. Das CPE wurde abfiltriert, mit Wasser gewaschen und getrocknet.

Die Korngrössenverteilung des erhaltenen CPE ist in der Tabelle dargestellt.

*Beispiel 3*
*(Vergleichsbeispiel)*

Es wurde analog Beispiel 2 verfahren, wobei jedoch auf den Zusatz der gemäss Beispiel 2a hergestellten Dispersion zum Chlorierungsgemisch nach beendeter Chlorierung verzichtet wurde.

Die Korngrössenverteilung des erhaltenen CPE ist in der Tabelle dargestellt.

*Tabelle*

| Produkt | Korngrössenverteilung (%) | | |
|---|---|---|---|
| | > 500 µm | > 315 µm | < 315 µm |
| Eingesetztes PE | 0 | 17 | 83 |
| CPE gemäss Beispiel 1 | 7 | 29 | 64 |
| CPE gemäss Beispiel 2 | 3 | 30 | 67 |
| CPE gemäss Vergleichsbeispiel 3 | 10 | 64 | 26 |

Aus der Tabelle geht hervor, dass bei Berücksichtigung der chlorierungsbedingten Volumenvergrösserung der CPE-Teilchen sich die Korngrössenverteilung des erfindungsgemäss behandelten CPE von der des eingesetzten PE nicht wesentlich unterscheidet.

Andererseits lässt die Korngrössenverteilung des CPE gemäss dem Vergleichsbeispiel 3 die Zusammenballung der CPE-Teilchen zu grösseren Teilchen eindeutig erkennen.

## Patentansprüche

1. Verfahren zur Herstellung von feinkörnigem, nicht agglomerierenden Chlorpolyethylen, durch Chlorierung von pulverförmigem Polyethylen in wässeriger oder wässerig-salzsaurer Suspension mit Chlorgas bei einer Temperatur von etwa 20 bis 140° C in Gegenwart von Kieselsäure und Silikonöl und Abtrennen, Waschen und Trocknen des Chlorpolyethylens, dadurch gekennzeichnet, dass man nach beendeter Chlorierung die wässerigsalzsaure Suspension des Chlorpolyethylens, gegebenenfalls nach vorheriger Abkühlung, mit einer wässerigen oder wässerig-salzsauren Dispersion, in welcher Talkum sowie ein Mono- und/oder Diester der Orthophosphorsäure oder ein Polysiloxan mit Hilfe eines Emulgators dispergiert sind, intensiv mischt und anschliessend aus dem Gemisch das Chlorpolyethylen abtrennt, wäscht und trocknet.

2. Verfahren nach Anspruch 1, dadurch gekennzeichnet, dass das Polyethylen ein Niederdruckpolyethylen mit einem Molekulargewicht zwischen etwa 10000 bis 2500000 und einer Korngrösse von 0,1 bis 500 µm ist.

3. Verfahren nach einem der Ansprüche 1 oder 2, dadurch gekennzeichnet, dass man die Chlorierung des Polyethylens in Gegenwart von 0,1 bis 2 Gew.-% Kieselsäure und 0,01 bis 1 Gew.-% Silikonöl, jeweils bezogen auf die Polyethylenmenge, durchführt.

4. Verfahren nach den Ansprüchen 1 bis 3, dadurch gekennzeichnet, dass die Chlorierung des Polyethylens in 5 bis 25%iger Salzsäure vorgenommen wird.

5. Verfahren nach den Ansprüchen 1 bis 4, dadurch gekennzeichnet, dass die Talkummenge etwa 2 bis 6 Gew.-%, die Menge des Orthophosphorsäureesters bzw. des Polysiloxans etwa 0,05 bis 1 Gew.-%, jeweils bezogen auf die Chlorpolyethylenmenge, und die Menge des Emulgators etwa 0,5 bis 2,5 Vol.-%, bezogen auf das Volumen der Chlorpolyethylensuspension, beträgt.

6. Verfahren nach den Ansprüchen 1 bis 5, dadurch gekennzeichnet, dass die Esterreste des Mono- und/oder Diesters der Orthophosphorsäure Alkylreste mit 10 bis 20 C-Atomen oder Polyoxyalkylenreste mit 4 bis 20 C-Atomen sind.

7. Verfahren nach Anspruch 6, dadurch gekennzeichnet, dass der Orthophosphorsäureester der Formel
$CH_3-(CH_2)_7-CH-CH-CH_2-O-(CH_2-CH_2-O)_5-P(OH)_2O$ oder
$[CH_3-(CH_2)_7-CH-CH-CH_2-O-(CH_2-CH_2-O)_5]_2-P(OH)O$ oder
$[iso\text{-}C_{13}H_{27}O]_2-P(OH)O$ oder
$C_6H_2(C_4H_9)_3-O-(CH_2-CH_2-O)_4-P(OH)_2O$ oder
$[C_6H_2(C_4H_9)_3-O-(CH_2-CH_2-O)_4]_2-P(OH)O$ oder
$C_6H_5-O-(CH_2-CH_2-O)_6-P(OH)_2O$ oder
$[C_6H_5-O-(CH_2-CH_2-O)_6]_2-P(OH)O$ oder
$C_4H_9-CH-C_2H_5)-CH_2-O-P(OH)_2O$ oder
$[C_4H_9-CH(C_2H_5)-CH_2-O]_2-P(OH)O$ entspricht.

8. Verfahren nach den Ansprüchen 1 bis 5, dadurch gekennzeichnet, dass das Polysiloxan ein Dimethylpolysiloxan ist.

9. Verfahren nach den Ansprüchen 1 bis 8, dadurch gekennzeichnet, dass der Emulgator ein nichtionischer Emulgator ist.

## Claims

1. Process for making fine particulate, non-agglomerating chloropolyethylene by subjecting pulverulent polyethylene to chlorination in an aqueous or aqueous/hydrochloric acid-suspension with chlorine gas at a temperature of about 20 to 140° C in the presence of silicic acid and silicon oil, separating, washing and drying the chloropolyethylene, which comprises: after terminating the chlorination, intensively mixing the aqueous/hydrochloric acid suspension of chloropolyethylene, if desired after cooling, with an aqueous or aqueous/hydrochloric acid-dispersion having talc as well as an orthophosphoric acid mono- and/or diester or a polysiloxane by means of an emulsifier dispersed in it; separating the chloropolyethylene from the mixture; and washing and drying it.

2. Process as claimed in Claim 1, wherein the polyethylene is low pressure polyethylene having a molecular weight between about 10000 and 2500000 and consisting of particles with a size of 0.1 to 500 µm.

3. Process as claimed in Claim 1 or 2, wherein the polyethylene is chlorinated in the presence of 0.1 to 2 weight % of silicic acid and 0.01 to 1 weight % of silicon oil, the percentages being in each case based on the polyethylene quantity.

4. Process as claimed in Claims 1 to 3, wherein the polyethylene is chlorinated in hydrochloric acid with a strength of 5 to 25%.

5. Process as claimed in Claims 1 to 4, wherein the talc is used in a proportion of about 2 to 6 weight %, the orthophosphoric acid ester or polysiloxane is used in a proportion of about 0.05 to 1 weight %, the percentages being in each case based on the chloropolyethylene quantity, and the emulsifier is used in a proportion of about 0.5 to 2.5% by volume, based on the volume of the chloropolyethylene suspension.

6. Process as claimed in Claims 1 to 5, wherein the ester groups of the orthophosphoric acid mono- and/or diester are alkyl groups having from 10 to 20 carbon atoms or polyoxyalkylene groups having from 4 to 20 carbon atoms.

7. Process as claimed in claim 6, wherein the orthophosphoric acid ester corresponds to the following formula:

$CH_3-(CH_2)_7-CH-CH-CH_2-O-(CH_2-CH_2-O)_5-P(OH)_2O$ or

$[CH_3-(CH_2)_7-CH-CH-CH_2-O-(CH_2-CH_2-O)_5]_2-P(OH)O$ or

$[iso\text{-}C_{13}H_{27}O]_2-P(OH)O$ or

$C_6H_2(C_4H_9)_3-O-(CH_2-CH_2-O)_4-P(OH)_2O$ or

$[C_6H_2(C_4H_9)_3-O-(CH_2-CH_2-O)_4]-P(OH)O$ or

$C_6H_5-O(CH_2-CH_2-O)_6-P(OH)_2O$ or

$[C_6H_5-O-(CH_2-CH_2-O)_6]_2-P(OH)O$ or

$C_4H_9-CH(C_2H_5)-CH_2-O-P(OH)_2O$ or

$[C_4H_9-CH(C_2H_5)-CH_2-O]_2-P(OH)O$.

8. Process as claimed in Claims 1 to 5, wherein the polysiloxane is a dimethylpolysiloxane.

9. Process as claimed in Claims 1 to 8, wherein the emulsifier is a non-ionic emulsifier.

## Revendications

1. Procédé de préparation de polyéthylène chloré en grains fins ne s'agglomérant pas par chloration de polyéthylène pulvérulent en suspension aqueuse ou chlorhydrique aqueuse par le chlore gazeux à une température d'environ 20-140°C en présence d'acide silicique et d'huile de silicone, puis séparation, lavage et séchage du polyéthylène chloré, caractérisé en ce que, après la fin de la chloration, on mélange énergiquement la suspension chlorhydrique aqueuse de polyéthylène chloré, éventuellement après refroidissement préalable, avec une dispersion aqueuse ou chlorhydrique aqueuse contenant du talc ainsi qu'un mono- et/ou un diester d'acide orthophosphorique ou un polysiloxanne dispersé à l'aide d'un émulsionnant, et en ce qu'on sépare le polyéthylène chloré du mélange, qu'on le lave et qu'on le sèche.

2. Procédé selon la revendication 1, caractérisé en ce que le polyéthylène est un polyéthylène basse pression d'un poids moléculaire compris entre environ 10000 et 2500000 et d'une dimension des particules de 0,1 à 500 µm.

3. Procédé selon l'une des revendications 1 ou 2, caractérisé en ce que l'on effectue la chloration du polyéthylène en présence de 0,1-2% en poids d'acide silicique et 0,01-1% en poids d'huile de silicone, les pourcentages étant chaque fois rapportés à la quantité de polyéthylène.

4. Procédé selon les revendications 1 à 3, caractérisé en ce que l'on effectue la chloration du polyéthylène dans de l'acide chlorhydrique à 5-25%.

5. Procédé selon les revendications 1 à 4, caractérisé en ce que l'on utilise le talc en quantité d'environ 2-6% en poids, l'ester d'acide orthophosphorique et le polysiloxanne, respectivement, en quantité d'environ 0,05-1% en poids, par rapport chaque fois à la quantité de polyéthylène, et l'émulsionnant en quantité d'environ 0,5-2,5% en volume, par rapport au volume de la suspension du polyéthylène chloré.

6. Procédé selon les revendications 1 à 5, caractérisé en ce que les groupes esters du mono- et/ou du diester de l'acide orthophosphorique sont des groupes alkyles en $C_{10}$-$C_{20}$ ou des groupes polyoxyalkylènes en $C_4$-$C_{20}$.

7. Procédé selon la revendication 6, caractérisé en ce que l'ester de l'acide orthophosphorique correspond à l'une des formules suivantes:

$CH_3-(CH_2)_7-CH-CH-CH_2-O-(CH_2-CH_2-O)_5-P(OH)_2O$ ou

$[CH_3-(CH_2)_7-CH-CH-CH_2-O-(CH_2-CH_2-O)_5]_2-P(OH)O$ ou

$[iso\text{-}C_{13}H_{27}O]_2-P(OH)O$ ou

$C_6H_2(C_4H_9)_3-O-(CH_2-CH_2-O)_4-P(OH)_2O$ ou

$[C_6H_2(C_4H_9)_3-O-(CH_2-CH_2-O)_4]_2-P(OH)O$ ou

$C_6H_5-O-(CH_2-CH_2-O)_6-P(OH)_2O$ ou

$[C_6H_5-O-(CH_2-CH_2-O)_6]_2-P(OH)O$ ou

$C_4H_9-CH(C_2H_5)-CH_2-O-P(OH)_2O$ ou

$[C_4H_9-CH(C_2H_5)-CH_2-O]_2-P(OH)O$.

8. Procédé selon les revendications 1 à 5, caractérisé en ce que le polysiloxanne est un diméthylpolysiloxanne.

9. Procédé selon les revendications 1 à 8, caractérisé en ce que l'émulsionnant est un émulsionnant non ionique.